# EUROPÄISCHE PATENTSCHRIFT

(11) **EP 0 616 337 B1**
(45) Veröffentlichungstag und Bekanntmachung des Hinweises auf die Patenterteilung: **11.12.1996**
(21) Anmeldenummer: 94103218.7
(22) Anmeldetag: 03.03.1994
(51) Int. Cl.: G21C 13/087

(54) **Reaktordruckbehälter mit limitierten Versagenszonen**
Reactor pressure vessel with limited zones of failure
Cuve de réacteur avec zones de rupture limitées

(30) Priorität: 15.03.1993 DE 4308207
(43) Veröffentlichungstag der Anmeldung: 21.09.1994
(73) Patentinhaber: SIEMENS AKTIENGESELLSCHAFT, 80333 München (DE)
(72) Erfinder: Senski, Gregor, Dipl.-Phys., D-90425 Nürnberg (DE)

(56) Entgegenhaltungen:
- EP-A- 0 044 255
- DE-A- 1 475 662
- DE-B- 2 636 743
- FR-A- 2 503 436
- GB-A- 2 080 436

## Beschreibung

Die Erfindung bezieht sich auf einen Reaktordruckbehälter für einen Kernreaktor.

Ein solcher Reaktordruckbehälter besteht üblicherweise aus einem unteren Teil, der als Kalotte ausgebildet ist, und einem anschließenden oberen Teil, der zylindrisch ausgebildet ist. Der Reaktordruckhehälter wird in der Regel durch sogenannte Befestigungspratzen festgehalten. Das Wandmaterial ist heutzutage üblicherweise ferritischer Werkstoffstahl, der für diesen speziellen Anwendungszweck entwickelt wurde und der beispielsweise unter der Bezeichnung 20MnMoNi55 bekannt ist. Im Betrieb steht der Reaktordruckbehälter unter einem hohen Innendruck, der bis ca. 170 bar betragen kann. Um diesem Druck standzuhalten, ist der untere Teil mit einer Wandstärke von etwa 15 cm und der obere Teil mit einer Wandstärke von etwa 25 cm ausgelegt. Im Kernkraftwerk ist der Reaktordruckbehälter von einem Reaktorschutzgebäude (Containment) umgeben, das im wesentlichen aus Beton besteht.

Die bisher üblichen Sicherheitsüberlegungen gingen davon aus, daß infolge von Materialwahl und Dimensionierung ein Versagen des Reäktordruckbehälters nicht zu befürchten ist. Im Zuge intensiverer sicherheitstechnischer Überlegungen zur Kernenergienutzung wird aber neuerdings auch der Fall in die Überlegungen einbezogen, daß ein Reaktordruckbehälter einmal "versagt", und sei dieser Fall auch noch so unwahrscheinlich. Insbesondere ein neuer Reaktortyp, der Europäische Druckwasserreaktor EPR (European Pressurized Water Reactor), basiert auf solchen Überlegungen. Im Gegensatz zur bisherigen Sicherheitsphilosophie wird bei diesem Reaktortyp ein Kernschmelzunfall - ein sogenannter GAU (größter anzunehmender Unfall) - nicht generell ausgeschlossen. Auch sind Überlegungen angestellt worden, ob nicht während eines Kernschmelzunfalls Dampfexplosionen auftreten können, und ob der in einer solch kritischen Phase schlagartig entstehende Wasserdampf den Druckbehälter nicht zum Platzen bringen kann. Es besteht keine Frage, daß solche Unfälle - so theoretisch sie auch sein mögen - beherrschbar sein müssen.

Theoretische Überlegungen gehen von folgendem aus: Bei Überlast thermischer Art (Überhitzung) oder mechanischer Art (Überdruck), insbesondere im Falle eines Kernschmelzunfalls, könnte es lokal in der homogenen Wand des Reaktordruckbehälters zu einem Riß kommen, der sich mit hoher Geschwindigkeit fortpflanzt. Er kann sich dann auf größere Bereiche unkontrolliert ausbreiten. Damit besteht die Möglichkeit, daß ein größerer Bereich herausbricht, beispielsweise die gesamte Kalotte im unteren Teil. Ähnliches könnte passieren, wenn bei dem hohen Innendruck der untere Teil des Reaktordruckgefäßes mit Kernschmelze gefüllt wird. Falls ein solches größeres Teil herausbrechen würde, würde es im Zeitbereich von weit weniger als einer Sekunde zu einem Reaktionsstoß kommen, bei dem der obere Teil des Reaktordruckgefäßes aus den Befestigungspratzen gerissen werden könnte, um raketenartig nach oben gegen die Innenwand des Containments geschleudert zu werden. Das Containment muß diesem Aufprall widerstehen. Ebenso muß das Containment dann ausreichend Widerstand leisten, wenn der Reaktordruckbehälter "explodiert", das heißt in mehrere größere oder kleinere Teile zerplatzt. Es ist schwierig, selbst mit einer größeren Beton-Konstruktion, solche explosionsartigen Einwirkungen aufzufangen.

Aufgabe der Erfindung ist es, einen Reaktordruckbehälter für einen Kernreaktor anzugeben, bei dem die Sicherheit weiter erhöht ist. Also selbst im unwahrscheinlichen Fall eines Risses in der Behälterwand infolge thermischer und/oder mechanischer Überlast (Überhitzung, Überdruck) soll die Sicherheit des Kernkraftwerks gewährleistet sein. Dies soll insbesondere auch für den Fall eines Kernschmelzunfalls im Reaktordruckbehälter gelten.

Die Erfindung beruht auf der Überlegung, daß ein spontanes globales Versagen des Reaktordruckbehälters vermieden oder eingegrenzt werden muß. Hierbei ist insbesondere an ein Herausbrechen eines größeren Teils, beispielsweise des gesamten unteren kugelkalottenförmigen Teils, aus der Behälterwand gedacht. Wenn dies gelingt, dann kann im Falle des angenommenen Unfalls kein unbeherrschbar hoher Reaktionsstoß auftreten. Mit anderen Worten: Dann sind die auf die Halterung oder Befestigung (Befestigungspratzen) des Reaktordruckbehälters einwirkenden Reaktionskräfte konstruktiv zu bewältigen. Die Erfindung beruht weiter auf der Überlegung, daß der Reaktionsstoß durch eine zeitliche Dehnung eines - wie auch immer unwahrscheinlichen - Rißprozesses klein gehalten werden kann.

Die genannte Aufgabe wird demgemäß erfindungsgemäß dadurch gelöst, daß der Reaktordruckbehälter zumindest im unteren Teil erste Teilbereiche mit geringerer Wandstärke und zweite Teilbereiche mit größerer Wandstärke besitzt, wobei die geringere Wandstärke auf den bestimmungsgemäßen Betrieb ausgelegt ist.

Eine konstruktiv vergleichsweise einfache Ausgestaltung zeichnet sich dadurch aus, daß die erster Teilbereiche mit geringerer Wandstärke Ausnehmungen auf der Außenfläche zumindest des unteren Teils sind. Die Wand eines Reaktordruckbehälters läßt sich erfahrungsgemäß leichter von außen als von innen bearbeiten. Außerdem ist - was von besonderer Bedeutung ist - eine leichte Prüfbarkeit des Reaktordruckbehälters von außen gewährleistet, weil dann der Innenbereich glatte Oberflächen aufweisen kann. Überdies kann man im Inneren auf Einbauten zum Ableiten einer hypothetisch auftretenden Kernschmelze verzichten.

Bevorzugt sind die Ausnehmungen nach innen gerundet, insbesondere kalottenförmig ausgebildet. Von Vorteil für die Herstellung ist es auch, wenn die Ausnehmungen - bei Betrachtung in Richtung auf die Außenfläche des Reaktordruckbehälters - eine symmetrische Konfiguration besitzen. Sie können also beispielsweise rund, ellipsenförmig oder hexagonal ausgebildet sein.

Bezüglich der Anzahl der Ausnehmungen und ihrer Größe gibt es - je nach Anwendungsfall und unterstelltem Unfall - eine große Variationsbreite. Aus Herstellungsgründen wird man jedoch bevorzugt dafür sorgen, daß alle ersten Teilbereiche oder Ausnehmungen dieselbe Größe besitzen. Bezüglich der Anzahl haben Überlegungen gezeigt, daß - je nach Größe - im unteren Teil des Reaktordruckbehälters zwischen 8 und 30 erste Teilbereiche oder Ausnehmungen ausreichend sind. Die genannten ersten Teilbereiche, insbesondere die genannten Ausnehmungen auf der Außenfläche, können dabei symmetrisch verteilt sein.

Es wurde bereits angeführt, daß bei einem Reaktordruckbehälter der obere Teil vorzugsweise zylindrisch ausgebildet ist. Es ist möglich, die ersten Teilbereiche mit geringerer Wandstärke auch im oberen Teil des Reaktordruckbehälters vorzusehen.

Ausführungsbeispiele der Erfindung werden im folgenden anhand von zwei Figuren näher erläutert. Es zeigen:
Figur 1 einen Reaktordruckbehälter nach dem Stand der Technik und
Figur 2 einen erfindungsgemäßen Reaktordruckbehälter mit Ausnehmungen im unteren und oberen Teil.

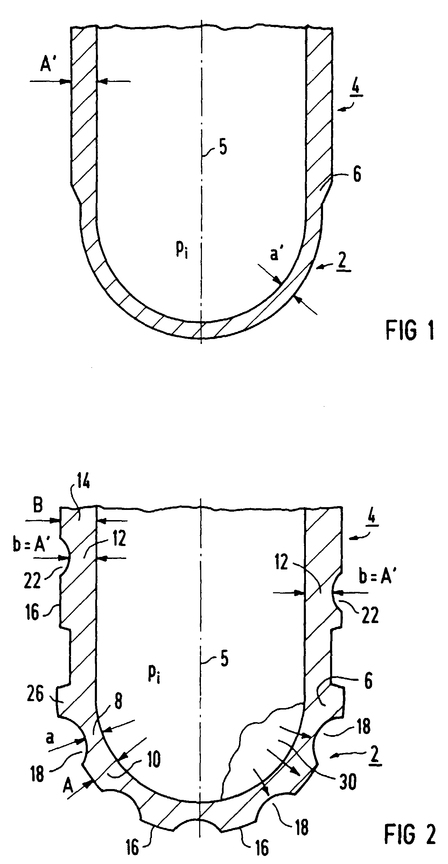

Nach Figur 1 umfaßt ein konventioneller Reaktordruckbehälter für ein Kernkraftwerk einen sphärischen unteren Teil 2 und einen zylindrischen oberen Teil 4. Die Symmetrielinie ist mit 5 bezeichnet. Beide Teile 2, 4 besitzen Wände, die innen und außen im wesentlichen glatt sind. Im Bereich einer Übergangsstelle 6 sind die Teile 2, 4 innig miteinander verbunden. Heutzutage werden die Teile 2, 4 üblicherweise aus einem ferritischen Werkstoffstahl hergestellt. Der untere Teil 2 hat eine relativ dünne Wand der Stärke a'. Die Stärke a' ist ausgelegt für den bestimmungsgemäßen Innendruck pi, der beispielsweise 160 bis 170 bar betragen kann. Die Wandstärke A' des zylindrischen oberen Teils 4 ist etwa um den Faktor 2 größer. Auch er ist für den bestimmungsgemäßen Innendruck pᵢ plus einem Sicherheitszuschlag ausgelegt. Übliche Werte sind a' = 15 cm und A' = 25 cm. Von Bedeutung ist, daß die Wände der Teile 2, 4 bisher homogen und jeweils für sich gleich stark ausgebildet wurden.

Hiervon ist bei dem Reaktordruckbehälter gemäß Figur 2 abgewichen. Dieser Druckbehälter enthält, wie im folgenden näher ausgeführt werden wird. im unteren Teil 2 und gegebenenfalls auch im oberen Teil 4 limitierte Versagenszonen oder -bereiche.

Figur 2 zeigt einen für einen Druckwasserreaktor bestimmten erfindungsgemäßen Reaktordruckbehälter, der ebenfalls einen kalottenförmigen unteren Teil 2 und einen zylindrischen oberen Teil 4 besitzt. Der Übergangsbereich ist wiederum mit 6 bezeichnet. Der untere Teil 2 besitzt erste Teilbereiche 8 mit geringerer Wandstärke a und zweite Teilbereiche 10 mit größerer Wandstärke A. Die geringere Wandstärke a ist hier auf den bestimmungsgemäßen Betrieb des Reaktordruckbehälters beim Innendruck pᵢ ausgelegt. Entsprechend besitzt der Reaktordruckbehälter im oberen Teil 4 erste Teilbereiche 12 mit geringerer Wandstärke b und zweite Teilbereiche 14 mit größerer Wandstärke B, wobei auch hier wiederum die geringere Wandstärke b auf den bestimmungsgemäßen Betrieb ausgelegt ist. Insbesondere kann die Wandstärke a gleich der Wandstärke a' (d. h. a = a') und die Wandstärke b gleich der Wandstärke A' (d. h. b = A') sein.

Die ersten Teilbereiche 8 im unteren Teil 2 werden durch Ausnehmungen 18 auf der Außenfläche 16 gebildet. Entsprechend werden im oberen Teil 4 die Teilbereiche 12 mit geringerer Wandstärke b durch Ausnehmungen 22 auf der Außenfläche 16 gebildet. Die Ausnehmungen 18, 22 sind nach innen gerundet, insbesondere haben sie eine kalottenförmige Ausgestaltung. Bei Betrachtung in Richtung auf die Außenfläche 16 besitzen die Ausnehmungen 18, 22 eine symmetrische Konfiguration. Sie können also beispielsweise rund, ellipsenförmig oder hexagonal erscheinen. Alle Ausnehmungen 18 - und damit alle ersten Teilbereiche 8 - haben vorliegend dieselbe Größe. Entsprechend haben auch alle Ausnehmungen 22 - und damit alle ersten Teilbereiche 12 - dieselbe Größe.

Als Wandmaterial wird im unteren und oberen Teil 2, 4 auch hier bevorzugt ein ferritischer Werkstoffstahl eingesetzt. Die geringste Wandstärke a in den besagten ersten Teilbereichen 8 im unteren Teil 2 beträgt etwa 15 cm, und die übrige Wandstärke A beträgt hier etwa 25 cm oder mehr. Im oberen Teil 4 beträgt die geringste Wandstärke b in den besagten ersten Teilbereichen 12 etwa 25 cm, und die übrige Wandstärke B beträgt mehr als 25 cm. In diesem Konstruktionsbeispiel ist also b = A' gewählt worden. Der Durchmesser jeder der Ausnehmungen 18, 22 liegt etwa im Bereich von 0,5 bis 2 m.

Im Übergangsbereich 6 zwischen dem unteren Teil 2 und dem oberen Teil 4 ist hier auf der Außenfläche 16 des Reaktordruckbehälters noch zusätzlich eine ringförmige Wandverdichtung oder ein Ring 26 vorgesehen oder angearbeitet. Dieser Ring 26 soll zusätzlich als Sicherheitsmaßnahme dienen und das Abreißen des kalottenförmigen unteren Teils 2 vom oberen Teil 4 unbedingt verhindern.

Im unteren Teil 2 sind vorliegend mindestens acht erste Teilbereiche 8 mit geringerer Wandstärke a vorgesehen. Steigert man die Anzahl der Ausnehmungen 18 von acht auf fünfzehn, so kann man immer noch davon ausgehen, daß der Reaktordruckbehälter von außen relativ leicht durch die sogenannten wiederkehrenden Prüfverfahren prüfbar ist. Wird die Anzahl der ersten Teilbereiche 8 beispielsweise weiter auf 30 gesteigert, so wird das hier theoretisch vorausgesetzte Unfallszenario noch leichter beherrschbar.

Die ersten Teilbereiche 8 mit der geringeren Wandstärke a sind im unteren Teil 2 bevorzugt symmetrisch verteilt. Dies kommt durch die eingezeichnete Symmetrielinie 5 zum Ausdruck.

Wichtig ist vor allem, daß erste Teilbereiche 8 mit geringerer, aber dem bestimmungsgemäßen Betrieb angepaßter Wandstärke a im kalottenförmigen unteren Teil 2 vorgesehen sind. Zusätzlich können aber auch, wie dargestellt, solche ersten Teilbereiche 12 mit geringerer Wandstärke b auch im zylindrischen oberen Teil 4 angeordnet sein.

Zur Funktion läßt sich folgendes sagen: Die Wand des Reäktordruckbehälters ist konstruktiv derart gestaltet, daß die dort vorgesehenen ersten Teilbereiche 8, 12 bei thermischer oder mechanischer Überlast zuerst versagen. Man kann diese ersten Teilbereiche 8, 12 als Sollbruchstellen ansprechen. Mit anderen Worten: In der insgesamt wesentlich dickeren Wand (Stärke A bzw. B) sind räumlich verteilt die ersten Teilbereiche 8, 12 mit der kleineren Wanddicke a bzw. b eingebracht. Diese Teilbereiche 8, 12 kann man auch mit "Maschenaugen" bezeichnen. Die Kleinere Wanddicke a, b ist dabei für die Belastungen des bestimmungsgemäßen Betriebes ausgelegt. Die "dickeren" Zonen, also die zweiten Teilbereiche 10, 14 mit der größeren Wandstärke A bzw. B, stellen dann eine Verstärkung der Behälterwand dar. Dies kann man als ein zusätzliches "Traggerüst" ansehen.

Der Einfachheit halber sei von nun an nur der untere Teil 2 betrachtet. Im Falle einer lokalen thermischen Überhitzung, zum Beispiel infolge einer Benetzung durch herabgefallene Kernschmelze 30, werden zuerst die dünneren Wandbereiche 8, also die Maschenaugen, versagen. Dies liegt daran, daß sie zeitlich viel schneller erwärmt werden als die dickere Wand des Traggerüsts, in dem infolge des Innendrucks pᵢ zudem noch eine wesentlich kleinere mechanische Spannung herrscht.

Bei einem Versagen entsteht in einem Maschenauge oder ersten Teilbereich 8 zuerst ein Durchriß. Dieser Riß kann sich bei dem bestehenden Innendruck pᵢ bis zu dem Traggerüst, gebildet durch die zweiten Bereiche 10, rasch ausbreiten. Wenn er dort angelangt ist, wird er entweder gestoppt oder umgelenkt. Dabei kann sich dann der gesamte erste Teilbereich 8, das heißt die gesamte Fläche des Maschenauges, öffnen und herausfallen. Durch die so gebildete Öffnung und durch eventuell noch andere Maschenaugen-Öffnungen kann das Behältermedium (Kühlmittel, wie zum Beispiel Wasserdampf, oder auch die flüssige Kernschmelze 30) ausströmen. Dadurch fällt der Innendruck pᵢ, wodurch wiederum ein weiteres Fortschreiten des Behälterversagens gestoppt wird. Die zweiten Bereiche 10 mit der größeren Wandstärke A sorgen also dafür, daß bei einem Riß die Zerstörung der Behälterwand relativ langsam vonstatten geht. Dadurch kann sich kein Reaktionsstoß mit hoher Amplitude ausbilden, was wiederum eine Reduzierung der Reaktionskraft auf die Halterung des Reaktordruckbehälters bedeutet. Von Wichtigkeit ist also, daß nicht sofort ein globales Druckbehälter-Versagen einsetzt, beispielsweise durch Abriß des gesamten unteren Teils 2, sondern daß allenfalls ein Maschenauge nach dem anderen versagen kann, was einen erheblichen Zeitgewinn und damit eine zeitliche Dehnung der Ausströmung des Behältermediums bedeutet. Auf diese Weise können die auftretenden Reaktionskräfte limitiert werden. Selbst ein Losreißen des Reaktordruckbehälters aus seiner Halterung dürfte dann nicht zu einer Gefährdung des umgebenden Beton-Gebäudes führen.

Abschließend sei noch angemerkt, daß sich die erfindungsgemäßen Maßnahmen prinzipiell bei allen Druckbehältern einsetzen lassen, bei denen zusätzliche Sicherheit gewährleistet sein soll, also beispielsweise bei Gasbehältern oder Behältern für die chemische Industrie.

## Patentansprüche

1. Reaktordruckbehälter für einen Kernreaktor der aus einem unteren Teil und einem anschließenden oberen Teil besteht, **dadurch gekennzeichnet**, daß er zumindest im unteren Teil (2) erste Teilbereiche (8, 12) mit geringerer Wandstärke (a, b) und zweite Teilbereiche (10, 14) mit größerer Wandstärke (A, B) besitzt, wobei die geringere Wandstärke (a, b) auf den bestimmungsgemäßen Betrieb ausgelegt ist.

2. Reaktordruckbehälter nach Anspruch 1, **dadurch gekennzeichnet**, daß die ersten Teilbereiche (8, 12) mit geringerer Wandstärke (a, b) durch Ausnehmungen (18, 22) auf der Außenfläche (16) gebildet sind.

3. Reaktordruckbehälter nach Anspruch 2, **dadurch gekennzeichnet**, daß die Ausnehmungen (18, 22) nach innen gerundet, insbesondere kalottenförmig ausgebildet sind.

4. Reaktordruckbehälter nach Anspruch 2 oder 3, **dadurch gekennzeichnet**, daß die Ausnehmungen (18, 22) - bei Betrachtung in Richtung auf die Außenfläche (16) - eine symmetrische Konfiguration besitzen und beispielsweise rund, ellipsenförmig oder hexagonal ausgebildet sind.

5. Reaktordruckbehälter nach einem der Ansprüche 1 bis 4, **dadurch gekennzeichnet**, daß alle ersten Teilbereiche (8, 12) dieselbe Größe besitzen.

6. Reaktordruckbehälter nach einem der Ansprüche 1 bis 5, **dadurch gekennzeichnet**, daß im unteren Teil (2) zwischen 8 und 30 erste Teilbereiche (8) mit geringerer Wandstärke (a) vorgesehen sind.

7. Reaktordruckbehälter nach einem der Ansprüche 1 bis 6, **dadurch gekennzeichnet**, daß die ersten Teilbereiche (8, 12) mit geringerer Wandstärke (a, b) symmetrisch verteilt sind.

8. Reaktordruckbehälter nach einem der Ansprüche 1 bis 7, **dadurch gekennzeichnet**, daß die ersten Teilbereiche (12) mit geringerer Wandstärke (b) auch im oberen Teil (4), der vorzugsweise zylindrisch ausgebildet ist, vorgesehen sind.

9. Reaktordruckbehälter nach einem der Ansprüche 1 bis 8, **dadurch gekennzeichnet**, daß die geringere Wandstärke (a) in den besagten ersten Teilbereichen (8) etwa 15 cm und die übrige Wandstärke (A) etwa 25 cm beträgt, wobei als Wandmaterial ein ferritischer Werkstoffstahl vorgesehen ist.

10. Reaktordruckbehälter nach einem der Ansprüche 2 bis 9, **dadurch gekennzeichnet**, daß der Durchmesser jeder der Ausnehmungen (18, 22) etwa im Bereich von 0,5 bis 2 m liegt.

11. Reaktordruckbehälter nach einem der Ansprüche 1 bis 10, **dadurch gekennzeichnet**, daß zwischen dem unteren Teil (2) und dem oberen Teil (4) auf der Außenfläche (16) ein Ring (26) vorgesehen ist.

## Claims

1. Reactor pressure vessel for a nuclear reactor which consists of a lower portion and an adjoining upper portion, characterised in that it has at least in the lower portion (2) first subregions (8, 12) with a lesser wall thickness (a, b) and second subregions (10, 14) with a greater wall thickness (A, B), the lesser wall thickness (a, b) being selected for a rated operation.

2. Reactor pressure vessel according to claim 1, characterised in that the first subregions (8, 12) having a lesser wall thickness (a, b) are formed by means of recesses (18, 22) on the outer surface (16).

3. Reactor pressure vessel according to claim 2, characterised in that the recesses (18, 22) are formed so as to be rounded inwards, in particular so as to be dome-shaped.

4. Reactor pressure vessel according to claim 2 or 3, characterised in that the recesses (18, 22) - when viewed in the direction of the outer surface (16) - have a symmetrical configuration and are, for example, formed so as to be round, elliptical or hexagonal.

5. Reactor pressure vessel according to one of the claims 1 to 4, characterised in that all the first subregions (8, 12) are of the same size.

6. Reactor pressure vessel according to one of the claims 1 to 5, characterised in that between 8 and 30 first subregions (8) having a lesser wall thickness (a) are provided in the lower portion (2).

7. Reactor pressure vessel according to one of the claims 1 to 6, characterised in that the first subregions (8, 12) having a lesser wall thickness (a, b) are symmetrically distributed.

8. Reactor pressure vessel according to one of the claims 1 to 7, characterised in that the first subregions (12) having a lesser wall thickness (b) are also provided in the upper portion (4) which is preferably formed so as to be cylindrical.

9. Reactor pressure vessel according to one of the claims 1 to 8, characterised in that the lesser wall thickness (a) in said first subregions (8) amounts to approximately 15 cm and the remaining wall thickness (A) amounts to approximately 25 cm, with a ferritic steel material being provided as the wall material.

10. Reactor pressure vessel according to one of the claims 2 to 9, characterised in that the diameter of each of the recesses (18, 22) lies approximately in the range of 0.5 to 2 m.

11. Reactor pressure vessel according to one of the claims 1 to 10, characterised in that a ring (26) is provided between the lower portion (2) and the upper portion (4) on the outer surface (16).

## Revendications

1. Cuve sous pression pour un réacteur nucléaire, consistant en une partie inférieure et en une partie supérieure qui s'y raccorde, caractérisée par le fait qu'elle présente, au moins dans la partie inférieure (2), des premières zones partielles (8, 12) à plus faible épaisseur de paroi (a, b) et des secondes zones partielles (10, 14) à plus forte épaisseur de paroi (A, B), l'épaisseur de paroi (a, b) plus faible étant conçue en fonction de l'exploitation selon les prescriptions.

2. Cuve sous pression selon la revendication 1, caractérisée par le fait que les premières zones partielles (8, 12) à plus faible épaisseur de paroi (a, b) sont constituées par des évidements (18, 22) sur la surface extérieure (16).

3. Cuve sous pression selon la revendication 2, caractérisée par le fait que les évidements (18, 22) sont arrondis vers l'intérieur, notamment en forme de calotte.

4. Cuve sous pression selon la revendication 2 ou 3, caractérisée par le fait que les évidements (18, 22) présentent - si l'on regarde en direction de la surface extérieure (16) - une conformation symétrique et qu'ils sont, par exemple, ronds, en forme d'ellipse ou d'hexagone.

5. Cuve sous pression selon l'une des revendications 1 à 4, caractérisée par le fait que toutes les premières zones partielles (8, 12) présentent la même taille.

6. Cuve sous pression selon l'une des revendications 1 à 5, caractérisée par le fait qu'il est prévu, dans la partie inférieure (2), entre 8 et 30 premières zones partielles (8) à plus faible épaisseur de paroi (a).

7. Cuve sous pression selon l'une des revendications 1 à 6, caractérisée par le fait que les premières zones partielles (8, 12) à plus faible épaisseur de paroi (a, b) sont réparties de manière symétrique.

8. Cuve sous pression selon l'une des revendications 1 à 7, caractérisée par le fait que les premières zones partielles (12) à plus faible épaisseur de paroi (b) sont également prévues dans la partie supérieure (4), qui est de préférence de forme cylindrique.

9. Cuve sous pression selon l'une des revendications 1 à 8, caractérisée par le fait que l'épaisseur de paroi (a) plus petite dans lesdites premières zones partielles (8) est d'environ 15 cm, l'épaisseur de paroi (A) restante étant d'environ 25 cm, tandis qu'il est prévu un acier ferritique en tant que matériau pour la paroi.

10. Cuve sous pression selon l'une des revendications 2 à 9, caractérisée par le fait que le diamètre de chacun des évidements (18, 22) se situe entre environ 0,5 et 2 m.

11. Cuve sous pression selon l'une des revendications 1 à 10, caractérisée par le fait qu'on prévoit un anneau (26) sur la surface extérieure (16), entre la partie inférieure (2) et la partie supérieure (4).
